Europäisches Patentamt

European Patent Office

Office européen des brevets

(11) Veröffentlichungsnummer: **0 372 218**
**A2**

(12) **EUROPÄISCHE PATENTANMELDUNG**

(21) Anmeldenummer: **89120161.8**

(22) Anmeldetag: **31.10.89**

(51) Int. Cl.5: **B60G 17/015**

(30) Priorität: **09.12.88 DE 3841476**

(43) Veröffentlichungstag der Anmeldung:
**13.06.90 Patentblatt 90/24**

(84) Benannte Vertragsstaaten:
**DE FR IT SE**

(71) Anmelder: **ROBERT BOSCH GMBH**
**Postfach 10 60 50**
**D-7000 Stuttgart 10(DE)**

(72) Erfinder: **Fahrnschon, Matthias, Dipl.-Ing.**
**Königstrasse 73**
**D-6740 Landau(DE)**
Erfinder: **Tillhon, Engelbert, Dipl.-Ing.**
**(BA) Reisweg 42**
**D-7128 Lauffen(DE)**

(54) **Verfahren zur Regelung einer druckluftgestützten Fahrzeugfederung.**

(57) Bei der separaten Niveauregelung der rechten und der linken Fahrzeugseite von luftgefederten Fahrzeugen, kann es vorkommen, daß während einer Niveauabsenkung das Niveau einer Fahrzeugseite noch oberhalb des Sollwertes ist, obwohl der Druck in dem entsprechenden Luftfederelement bereits auf einen zulässigen Mindestdruck abgesunken ist. Dieser Effekt tritt hauptsächlich bei einer Verspannung des Fahrzeugrahmens auf, insbesondere bei unbeladenem Fahrzeug.

Unter Verwendung von Ventilen (25, 26, 27), Weg-Sensoren (5, 6) und Druck-Sensoren (9, 10) wird mit einer Steuereinrichtung (15) in dem erwähnten Fall dafür gesorgt, daß auf der Seite entlüftet wird, auf der das Niveau bereits innerhalb eines Toleranzbandes liegt, um das mittlere Fahrzeugniveau auf einen zulässigen Wert zu bekommen.

Das Verfahren kann bei sämtlichen luftgefederten Fahrzeugen, z.B. bei Bussen und Lastkraftwagen, angewendet werden.

## Verfahren zur Regelung einer druckluftgestützten Fahrzeugfederung

Stand der Technik

Die Erfindung geht aus von einer druckluftgestützten Fahrzeugfederung nach der Gattung des Hauptanspruchs.

Es wurde bereits ein Verfahren zur Regelung einer druckluftgestützten Fahrzeugfederung vorgeschlagen, bei dem für Fahrzeuge mit mehreren Luftfederelementen eine Steuerung dafür sorgt, daß bei mindestens zwei Luftfederelementen eine separate Belüftung oder Entlüftung der Druckräume dieser Luftfederelemente möglich ist. Die Belüftung oder Entlüftung erfolgt in Abhängigkeit von Stellsignalen einer Steuereinrichtung, welche über eine Soll-Ist-Vergleichseinrichtung zum Vergleich gespeicherter Druck- und Abstandswerte mit tatsächlich vorliegenden Werten verfügt. Dazu befinden sich in der bekannten Fahrzeugfederung Druck-Meßeinrichtungen, welche die Drücke in den Luftfederelementen erfassen, sowie Weg-Meßeinrichtungen, welche die Abstände zwischen dem Fahrzeugaufbau und den Fahrzeugachsen und damit das Niveau des Fahrzeugaufbaus relativ zum Fahruntergrund aufnehmen.

Bei dem vorgeschlagenen Verfahren erfolgt die Belüftung/Entlüftung der Luftfederelemente getrennt voneinander, z.B. separat für die linke und für die rechte Fahrzeugseite. Bei einer Belüftung eines Luftfederelementes wird Luft in das Luftfederelement gedrückt. Dadurch wird, je nach Umstand, der durch dieses Luftfederelement einstellbare Abstand zwischen der Fahrzeugachse und dem Fahrzeugaufbau vergrößert, d.h. das Niveau des Fahrzeugaufbaus wird gehoben und/oder es wird der Druck in dem Druckraum des Luftfederelementes erhöht. Bei einer Entlüftung wird Luft aus dem Druckraum des Luftfederelementes gelassen, was eine Verkleinerung des durch dieses Luftfederelement einstellbaren Abstandes und/oder eine Absenkung des Druckes bewirkt.

Bei einer Niveau-Absenkung kann es vorkommen, daß, wenn z.B. ein erster durch ein erstes Luftfederelement einstellbarer Abstand innerhalb eines zugehörenden Abstand-Sollwerttoleranzbandes liegt, ein zweiter durch ein zweites Luftfederelement einstellbarer Abstand oberhalb eines zugehörenden Abstand-Sollwerttoleranzbandes liegt und in diesem zweiten Luftfederelement gleichzeitig ein zugehörender Mindestdruck erreicht bzw. unterschritten wird. Ein anhaltendes Entlüften des zweiten Luftfederelementes hat keine weitere nennenswerte Absenkung des Niveaus zur Folge, sondern birgt die Gefahr in sich, daß der Druck in dem Druckraum des zweiten Luftfederelementes bis auf Atmosphärendruck absinkt. Falls der durch das zweite Luftfederelement einstellbare zweite Abstand nicht innerhalb des zugehörenden Abstand-Sollwerttoleranzbandes liegt, müßte eigentlich ein Ventil zum Entlüften des Druckraumes des zweiten Luftfederelementes geschaltet bleiben. Dies kann durch Überwachung der Einschaltdauer der Magnete verhindert werden. Sobald einzelne Schaltventile eine gewisse Einschaltzeit überschreiten, verhindert eine Überwachungseinrichtung ein weiteres Schalten der Ventile. Die Regelung wird abgeschaltet, da scheinbar eine Störung im System vorliegt.

Der Grund dieses Effektes liegt häufig in einer Verspannung des Fahrzeugrahmens, weil z.B. das Gewicht des Aufbaus nahezu vollständig von dem ersten Luftfederelement getragen wird bzw. von einer anderen Achse übernommen wird, z.B. von einer Vorderachse oder einer eventuell zusätzlich vorhandenen Liftachse. Die Verspannung des Fahrzeugrahmens tritt hauptsächlich bei unbeladenem Fahrzeug auf, da ohne Last die nötige Gegenkraft zum Absenken fehlt.

Vorteile der Erfindung

Das eingangs genannte Verfahren mit den kennzeichnenden Merkmalen des Hauptanspruchs bietet demgegenüber den Vorteil, daß bei Auftreten des oben beschriebenen Zustandes ein geeigneter Niveaumittelwertregelungs-Vorgang eingeleitet wird, bei dem ein mittleres Niveau des Fahrzeugaufbaus in gewünschter Weise weiter abgesenkt werden kann, obwohl der erste Abstand bereits innerhalb des zugehörenden Abstand-Sollwerttoleranzbandes liegt und obwohl der Druck in dem zweiten Luftfederelement nicht mehr größer ist als ein Mindestdruck und trotzdem der durch dieses zweite Luftfederelement einstellbare zweite Abstand oberhalb eines Abstand-Sollwerttoleranzbandes liegt.

Durch die in den Unteransprüchen aufgeführten Maßnahmen sind vorteilhafte Weiterbildungen und Verbesserungen des im Hauptanspruch angegebenen Verfahrens möglich.

Vorteilhaft ist, daß der Niveaumittelwertregelungs-Vorgang beendet wird, sobald der Druck in dem Druckraum des ersten Luftfederelementes nicht mehr größer ist als der zugehörende Mindestdruck und/oder sobald der erste Abstand nicht mehr innerhalb des zugehörenden Abstand-Sollwerttoleranzbandes liegt und/oder wenn ein Mittelwert aus dem ersten Abstand und dem zweiten Abstand innerhalb eines Abstand-Mittelwerttoleranzbandes liegt und/oder sobald der zweite Abstand innerhalb des zugehörenden Abstand-Sollwerttoleranzbandes liegt. Dies verhindert in günstiger Weise das Auftreten einer Störung und damit ein Abschalten der Regelung.

Durch das erfindungsgemäße Verfahren wird desweiteren in vorteilhafter Weise verhindert, daß z.B. bei einer Verspannung des Fahrzeugrahmens und/oder bei einer einseitigen Beladung des Fahrzeuges die Möglichkeit zur Niveauabsenkung nicht mehr gewährleistet ist.

Vorteilhaft ist es schließlich auch, daß eine zu unterschiedliche Druckverteilung in den Druckräumen der Luftfederelemente, z.B. zwischen den Luftfederelementen der linken und der rechten Fahrzeugseite, oder gar eine völlige Entlüftung eines der Luftfederelemente verhindert wird.

Auch verschlechtern ein falsches Niveau des Fahrzeugaufbaus, zu unterschiedliche Druckverteilung und/oder ein völlig entlüftetes Luftfederelement die Fahreigenschaften. Derartige Verschlechterungen werden durch das erfindungsgemäße Verfahren in vorteilhafter Weise verhindert.

Zeichnung

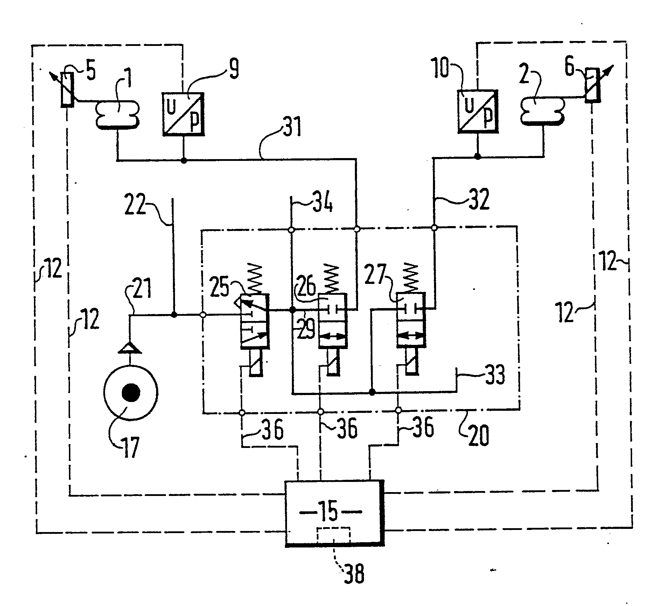

Die Zeichnung zeigt schematisch einen schaltungstechnischen Aufbau eines Ausführungsbeispieles.

Beschreibung des Ausführungsbeispieles

Das Verfahren zur Regelung einer druckluftgestützten Fahrzeugfederung für ein luftgefedertes Fahrzeug soll anhand seiner beispielsweisen Verwendung bei einem dreiachsigen, straßengängigen Nutzfahrzeug näher erläutert werden.

Üblicherweise ist bei einem derartigen Fahrzeug eine der Achsen am Fahrzeug vorne und zwei der Achsen sind am Fahrzeug hinten angeordnet. Normalerweise befinden sich an jeder Achse mindestens zwei Räder. Häufig sind nur die Räder einer der beiden hinteren Achsen antreibbar. Diese Achse hat die Funktion einer Treibachse und die andere der beiden hinteren hat die Funktion einer Nachlaufachse oder Liftachse. Zwecks guter Traktion wird die Treibachse üblicherweise soweit wie möglich belastet, und die Nachlaufachse trägt nur noch den Teil der Last, der von der Treibachse nicht übergenommen werden kann. Dementsprechend wird durch eine geeignete Regelung dafür gesorgt, daß ein Fahrzeugaufbau des Fahrzeuges innerhalb eines vorgesehenen Niveaus liegt. Mindestens bei der Treibachse geschieht diese Regelung üblicherweise separat für die linke und für die rechte Fahrzeugseite, d.h. ein Luftfederelement für die linke Fahrzeugseite an der Treibachse ist separat zu einem Luftfederelement auf der rechten Seite der Treibachse ansteuerbar.

Mit dem linken Luftfederelement der Treibachse ist ein Abstand zwischen dem linken Teil der Treibachse und dem sich darüber befindlichen Bereich des Fahrzeugaufbaus einstellbar. Somit kann mit diesem Luftfederelement das Niveau des Fahrzeugaufbaus über einem Fahruntergrund an dieser Stelle eingestellt werden. Bei dem rechten Luftfederelement der Treibachse ist es entsprechend.

Nach einem Entladevorgang des Nutzfahrzeuges muß normalerweise das Niveau des Fahrzeugaufbaus neu eingeregelt werden, weil mindestens das Niveau des Fahrzeugaufbaus an mindestens einer Stelle oberhalb eines entsprechenden Niveau-Sollwerttoleranzbandes liegt, d.h. mindestens einer der Abstände liegt oberhalb eines entsprechenden Abstand-Sollwerttoleranzbandes.

Zwecks Vereinfachung wird im folgenden das linke Luftfederelement als erstes Luftfederelement bezeichnet und das rechte Luftfederele ment als zweites Luftfederelement. Beim Absenken des Niveaus des Fahrzeugaufbaus kann es nun vorkommen, daß z.B. der durch das erste Luftfederelement einstellbare erste Abstand innerhalb eines zugehörenden Abstand-Sollwerttoleranzbandes liegt, während der durch das zweite Luftfederelement einstellbare zweite Abstand noch oberhalb seines Abstand-Sollwerttoleranzbandes liegt, obwohl der Druck in dem Druckraum dieses zweiten Luftfederelementes nicht mehr größer ist als ein zugehörender Mindestdruck. Ein Grund für diesen Effekt kann z.B. in einer Verspannung eines Fahrzeugrahmens des Fahrzeugaufbaus liegen, z.B. bei einer ungleichmäßigen Lastverteilung oder z.B. wegen der Nachlaufachse oder der Liftachse. Die Verspannung des Fahrzeugrahmens kommt im wesentlichen bei schwach bzw. unbeladenem Fahrzeug vor, da ohne Last bzw. bei geringer Last die nötige Gegenkraft zum Absenken fehlt.

In der Zeichnung ist ein Schaltplan ausschnittsweise dargestellt. Mit den Bauteilen dieses Schaltplanes ist es bei Anwendung des erfindungsgemäßen Verfahrens möglich, auch bei z.B. einer Verspannung des Fahrzeugrahmens den Fahrzeugaufbau zumindest im Mittel innerhalb eines vorgesehenen Niveau-Mittelwerttoleranzbandes zu bekommen.

Eines der beiden dargestellten Luftfederelemente ist z.B. für die linke Fahrzeugseite zuständig und wird in der Zeichnung mit 1 bezeichnet und das andere für die andere Fahrzeugseite zuständige wird in der Zeichnung mit 2 bezeichnet. Die Luftfederelemente 1 und 2 sind zwischen dem Fahrzeugaufbau und einer Fahrzeugachse, z.B. der Treibachse, angeordnet. Die Fahrzeugachse kann eine durchgehende Achse sein, sie kann aber auch eine geteilte Achse sein. Unter einer Fahrzeugachse kann jede Radaufhängung verstanden werden, an der die Räder befestigt sind.

Auf der einen Fahrzeugseite ist eine Weg-Meßeinrichtung 5 so angeordnet, daß sie den Abstand zwischen dem Fahrzeugaufbau und der Fahrzeugachse auf dieser Seite erfassen kann. Auf der anderen Seite ist eine andere Weg-Meßeinrichtung 6 in gleicher Weise vorgesehen. Da die Länge eines Luftfederelementes 1, 2 das Niveau des Fahrzeugaufbaus über der Fahrzeugachse bzw. über dem Fahruntergrund bestimmt, wird mit den Weg-Meßeinrichtungen 5, 6 gleichzeitig die Länge des entsprechenden Luftfederelementes, d.h. der entsprechende Abstand bzw. das Niveau des Fahrzeugaufbaus ermittelt. Die Erfassung der Abstände kann auch indirekt geschehen, z.B. durch Messen des Abstandes zwischen dem Fahrzeugaufbau und dem Fahruntergrund. Mit einem Druckraum des Luftfederelemente 1 ist eine Druckmeßeinrichtung 9 verbunden. Damit kann der Druck in dem Luftfederelement 1 erfaßt werden. Eine andere Druck-Meßeinrichtung 10 erfaßt den Druck in einem Druckraum des anderen Luftfederlementes 2. Meßsignale von den Weg-Meßeinrichtungen 5, 6 und von den Druck-Meßeinrichtungen 9, 10 werden über Meßleitungen 12 einer Steuereinrichtung 15 zugeleitet. Die Steuereinrichtung 15 kann, wie dargestellt, als eine Einheit ausgebildet sein, sie kann aber auch, wie nicht dargestellt, in mehrere Einzelkomponenten aufgeteilt sein.

Weitere wesentliche Komponenten sind eine Druckquelle 17 und ein Steuerblock 20. In der symbolisch dargestellten Druckquelle 17 sind sämtliche, für eine ordnungsgemäße Druckversorgung erforderlichen Bauteile, z.B. Motor, Pumpe, Druckregler usw., zusammengefaßt. Von der Druckquelle 17 wird der Steuerblock 20 über die Zuleitung 21 mit Druckluft versorgt. Von der Zuleitung 21 kann eine Leitung 22 zu weiteren, nicht dargestellten Verbrauchern führen. Der Steuerblock 20 kann, wie nicht dargestellt, aus einem Ventil bestehen, oder es können mehrere, z.B. wie dargestellt, drei Ventile miteinander verbunden sein. Ein erstes Ventil 25 sperrt in seiner ersten Stellung die Zuleitung 21 und verbindet gleichzeitig weitere Ventile 26 und 27 mit der Atmosphäre. In seiner zweiten Stellung verbindet das Ventil 25 die Ventile 26 und 27 mit der Druckquelle 17. Die Ventile 26 und 27 sind gleichartig und arbeiten nach Art eines Absperrventils, d.h. sie geben eine Verbindung also entweder frei oder nicht. Die Ventile 26 und 27 sind einerseits an das Ventil 25 über die Leitung 29 angeschlossen und stehen andererseits mit den Luftfederelementen 1 und 2 in Verbindung, wobei jedes der Ventile 26 und 27 je eines der beiden Luftfederelemente 1 und 2 über je eine Verbraucherleitung 31 und 32 beaufschlagt. Die Ventile 25, 26 und 27 können, wie dargestellt, elektromagnetisch direkt betätigte, oder, wie nicht dargestellt, z.B. elektromagnetisch vorgesteuerte, pneumatisch betätigte Ventile sein. Von der Leitung 29 können eine oder mehrere weitere Leitungen 33 abzweigen, an die eines oder mehrere, nicht dargestellte Ventile nach Art der Ventile 26 und 27 angeschlossen sein können. Mit diesen Ventilen können weitere, nicht dargestellte Luftfederelemente betätigt und in das erfindungsgemäße Verfahren einbezogen werden. Von der Leitung 29 kann eine weitere, für das erfindungsgemäße Verfahren nicht notwendige Verbraucherleitung 34 abzweigen. Zur Übermittlung von von der Steuereinrichtung 15 ausgehenden Steuersignalen ist die Steuereinrichtung 15 über Steuerleitungen 36 mit den Ventilen 25 bis 27 des Steuerblocks 20 verbunden.

In der Zeichnung ist nur ein Ausschnitt einer pneumatischen Fahrzeugfederung, und zwar nur der Teil gezeigt, welcher auch für das erfindungsgemäße Verfahren notwendig ist. Mit dem erfindungsgemäßen Verfahren wird verhindert, daß bei unzweckmäßigen Regelvorgängen aufgrund, z.B. einer Verspannung des Fahrzeugrahmens, eine notwendige Niveauabsenkung nicht mehr möglich ist. Die völlige Entlüftung eines Luftfederelementes wird rechtzeitig gestoppt, was wegen der sonst stark unterschiedlichen Druckverhältnisse in den Luftfederelementen z.B. links und rechts zu ungünstigen Fahreigenschaften führen kann. Weiterhin wird vermieden, daß fälschlicherweise ein ggf. vorhandenes Sicherheitssystem 38 innerhalb der Steuereinrichtung 15 anspricht und die Regelung außer Betrieb setzt. Die Steuereinrichtung 15 enthält häufig ein Sicherheitssystem 38, welches dafür sorgen soll, daß keines der Ventile 25, 26, 27 unzulässig lange bestromt wird.

Während einer Absenkung des Fahrzeugaufbaus kann es vorkommen, daß ein erster, mit Hilfe eines ersten Luftfederelementes einstellbarer Abstand innerhalb eines zugehörenden Abstand-Toleranzbandes liegt, und gleichzeitig ein zweiter, mit Hilfe eines zweiten Luftfederelementes einstellbarer Abstand oberhalb eines zugehörenden Abstand-Sollwerttoleranzbandes liegt. Der Druck in dem Druckraum des ersten Luftfederelementes sei dabei größer als ein zugehörender Mindestdruck und der Druck in dem Druckraum des zweiten Luftfederelementes sei gleich oder gar kleiner als ein zugehörender Mindestdruck. Um den zweiten Abstand zu verringern, wäre man an sich geneigt, den Druckraum des zweiten Luftfederelementes weiter zu entlüften. Dies ist jedoch nicht zweckmäßig, da hierbei der Druck in dem Druckraum des zweiten Luftfederelementes zu stark absinken würde. Hier ist es zweckmäßiger, das erfindungsgemäße Verfahren anzuwenden.

Aus Vereinfachungsgründen wird im Fortgang dieser Beschreibung angenommen, daß der mit Hilfe des Luftfederelementes 1 einstellbare Abstand innerhalb eines zugehörenden Abstand-Sollwerttoleranzbandes liegt und der Druck in dem Druckraum dieses Luftfederelementes 1 ist größer als ein zugehörender Mindestdruck. Das Luftfederelement 1 sei das erste Luftfederelement und bestimme den ersten Abstand. Der durch das Luftfederelement 2 einstellbare Abstand liege oberhalb eines zugehörenden Abstand-Sollwerttoleranzbandes und der Druck in dem Luftfederelement 2 sei zumindest nicht größer als ein zugehörender Mindestdruck. Das Luftfederelement 2 sei das zweite Luftfederelement und bestimme den zweiten Abstand.

Sollte die beschriebene Konstellation auftreten, so wird ein Niveaumittelwertregelungs-Vorgang eingeleitet. Dieser bewirkt, daß der Druckraum des Luftfederelementes 1 entlüftet wird.

Als Voraussetzung wann der Niveaumittelwertregelungs-Vorgang beendet werden soll, gibt es mehrere Möglichkeiten. Erste Möglichkeit: Der Niveaumittelwertregelungs-Vorgang wird beendet, wenn der Druck in dem Druckraum des Luftfederelementes 1 nicht mehr größer ist als der zugehörende Mindestdruck. Zweite Möglichkeit: Der Niveaumittelwertregelungs-Vorgang wird beendet, wenn der erste Abstand nicht mehr innerhalb des zugehörenden Abstand-Sollwerttoleranzbandes liegt. Dritte Möglichkeit: Der Niveaumittelwertregelungs-Vorgang wird beendet, wenn ein Mittelwert aus dem ersten Abstand und dem zweiten Abstand innerhalb eines Abstand-Mittelwerttoleranzbandes liegt. Vierte Möglichkeit: Der Niveaumittelwertregelungs-Vorgang wird beendet, wenn der zweite Abstand innerhalb des zugehörenden Abstand-Sollwerttoleranzbandes liegt. Fünfte Möglichkeit: Der Niveaumittelwertregelungs-Vorgang wird beendet, wenn der Druck in dem Druckraum des Luftfederelementes 2 größer ist als der zugehörende Mindestdruck. Die fünfte Möglichkeit kann eintreten, wenn sich z.B. eine Verspannung des Fahrzeugrahmens während des Niveaumittelwertregelungs-Vorgangs löst.

Je nach Bedarf kann das Verfahren z.B. so angelegt sein, daß der Niveaumittelwertregelungs-Vorgang beendet wird, wenn mindestens eine der fünf Möglichkeiten erfüllt ist. Es kann aber auch zweckmäßiger sein, z.B. nur die erste, dritte, vierte und fünfte Möglichkeit zu berücksichtigen und das Verfahren so anzulegen, daß der Niveaumittelwertregelungs-Vorgang beendet wird, wenn mindestens eine dieser vier Möglichkeiten erfüllt ist. Auch andere Kombinationen können je nach Bedarf zweckmäßig sein. Möglich ist aber auch, den Vorgang zu beenden, wenn z.B. mindestens zwei von mehreren ausgewählten Möglichkeiten erfüllt sind.

Nach Beendigung des Niveaumittelwertregelungs-Vorgangs wird auf bisherige, d.h. z.B. auf getrennte Regelung der einzelnen Luftfederelemente umgeschaltet.

Bei dem erfindungsgemäßen Verfahren gehört zu jedem Luftfederelement ein Mindestdruck und zu jedem der durch die Luftfederelemente einstellbaren Abstände gehört ein Abstand-Sollwerttoleranzband. Dabei ist es gleichgültig, ob für alle Mindestdrücke der gleiche Wert oder, je nach Bedarf, verschiedene Werte gelten. Ebenso können, müssen aber nicht, alle Abstand-Sollwerttoleranzbänder wertmäßig gleich sein. Die Toleranzbänder können mehr oder weniger breit sein, bzw. nur einen Wert umfassen. Die Mindestdrücke, die Abstand-Sollwerttoleranzbänder und das Abstand-Mittelwerttoleranzband können nach Bedarf beliebig festgelegt werden.

Das Verfahren wurde anhand eines Ausführungsbeispieles mit zwei Luftfederelementen erläutert. Genau so gut ist das Verfahren auch mit mehr als zwei Luftfederelementen möglich. An dem Verfahren können alle oder nur ein Teil der in dem Fahrzeug zwischen dem Fahrzeugaufbau und einer der Fahrzeugachsen bzw. Radaufhängungen angeordneten Luftfederelemente beteiligt sein.

Die Luftfederelemente können unterschiedlichster Bauart sein, z.B. Pneumatik-Zylinder, Luftbälge, Gasfedern usw.

**Ansprüche**

1. Verfahren zur Regelung einer druckluftgestützten Fahrzeugfederung mit mindestens zwei zwischen mindestens einem Fahrzeugaufbau und mindestens einer Fahrzeugachse bzw. Radaufhängung angeordneten Luftfederelementen, ferner Weg-Meßeinrichtungen zur Erfassung von mit Hilfe der Luftfederelemente einstellbaren Abständen zwischen dem Fahrzeugaufbau und der mindestens einen Fahrzeugachse bzw. Radaufhängung und mit Druck-Meßeinrichtungen zur Druckmessung in Druckräumen der Luftfederelemente, ferner mit mindestens einer Druckquelle und mit mindestens einem Steuerventil zur Be- und Entlüftung der Druckräume der Luftfederelemente in Abhängigkeit von auf das Steuerventil einwirkenden Steuersignalen und ferner mit einer Steuereinrichtung, von der, in Abhängigkeit von den von den Weg-Meßeinrichtungen und den Druck-Meßeinrichtungen ausgehenden Meß-Signalen und einem der Steuereinrichtung vorgegebenen Programm, die Steuersignale ausgehen, dadurch gekennzeichnet, daß, bei Auftreten eines ersten, mit Hilfe eines ersten Luftfederelementes (1) einstellbaren Abstandes innerhalb eines zugehörenden Abstand-Sollwerttoleranzbandes, im ersten Luftfederelement-Druckraum ein Druck größer ist als ein zugehörender Mindestdruck und daß gleichzeitig, bei Auftreten eines zweiten, mit Hilfe eines zweiten Luftfederelementes (2) einstellbaren Abstandes oberhalb eines zugehörenden Abstand-Sollwerttoleranzbandes, in dem Druckraum dieses zweiten Luftfederelementes ein Druck nicht größer ist als ein zugehörender Mindestdruck, ein Niveaumittelwertregelungs-Vorgang eingeleitet wird, der eine Entlüftung des ersten Luftfederelementes (1) bewirkt.

2. Verfahren nach Anspruch 1, dadurch gekennzeichnet, daß der Niveaumittelwertregelungs-Vorgang beendet wird, wenn der Druck in dem Druckraum des ersten Luftfederelementes (1) nicht mehr größer ist als der zugehörende Mindestdruck.

3. Verfahren nach Anspruch 1, dadurch gekennzeichnet, daß der Niveaumittelwertregelungs-Vorgang beendet wird, wenn der erste Abstand nicht mehr innerhalb des zugehörenden Abstand-Sollwerttoleranzbandes liegt.

4. Verfahren nach Anspruch 1, dadurch gekennzeichnet, daß der Niveaumittelwertregelungs-Vorgang beendet wird, wenn ein Mittelwert aus dem ersten Abstand und dem zweiten Abstand innerhalb eines Abstand-Mittelwerttoleranzbandes liegt.

5. Verfahren nach Anspruch 1, dadurch gekennzeichnet, daß der Niveaumittelwertregelungs-Vorgang beendet wird, wenn der zweite Abstand innerhalb des zugehörenden Abstand-Sollwerttoleranzbandes liegt.

6. Verfahren nach Anspruch 1, dadurch gekennzeichnet, daß der Niveaumittelwertregelungs-Vorgang beendet wird, wenn der Druck in dem Druckraum des zweiten Luftfederelementes (2) größer ist als der zugehörende Mindestdruck.